# EUROPEAN PATENT SPECIFICATION

(11) **EP 1 706 304 B1**
(45) Date of publication and mention of the grant of the patent: **28.11.2007**
(21) Application number: 04801738.8
(22) Date of filing: 13.12.2004
(51) Int. Cl.: B60W 30/18, B60W 10/06, B60W 10/10, B60W 10/18

(54) **TRUCK COMPRISING A SPEED REGULATING SYSTEM**
LASTWAGEN MIT EINEM GESCHWINDIGKEITSREGELUNGSSYSTEM
CAMION COMPRENANT UN SYSTEME DE REGULATION DE LA VITESSE

(30) Priority: 15.01.2004 SE 0400070
(43) Date of publication of application: 04.10.2006
(73) Proprietor: Cargotec Patenter Handelsbolag, 341 81 Ljungby (SE)
(72) Inventor: LÖNN, Jan, S-340 14 Lagan (SE); TIDSTRAND, Henry, S-341 33 Ljungby (SE)
(74) Representative: Lundquist, Lars-Olof
(86) International application number: PCT/SE2004/001847
(87) International publication number: WO 2005/068243

(56) References cited:
- US-A- 5 431 607
- US-A- 5 581 465
- US-B1- 6 220 226
- DATABASE WPI Week 199146, Derwent Publications Ltd., London, GB; Class B60, AN 1991-337932, XP002986170 & SU 1 614 961 A 23 December 1990

## Description

The present invention relates to a truck comprising an engine, a gear box, a brake and a speed regulating system, said system including:
- a manual speed control lever, being controllable by the operator of the truck within a regulating range having a first extreme position, corresponding to a speed of 0 km/h of the truck, and a second extreme position, corresponding to the maximum speed at which the truck can or may be operated;
- a control unit, being arranged for registering the position of the speed control lever and for transmitting a gear ratio regulating control signal to the gear box, a speed regulating control signal to the engine, as well as a brake regulating control signal to the brake, as a function of said position,
wherein said control signals are arranged for controlling the speed of the engine, the gear ratio of the gear box and the braking action of the brake, respectively, so that a truck speed corresponding to the position of the speed control lever is obtained.

The technical background art of the present invention is described in US 5581465 A, US 6220226 B1, US 5431607 A and SU 1614961 (Abstract).

One problem when speed regulating a truck in accordance with the foregoing is that the driving runs the risk of becoming jerky, since the control system continuously tries to adapt the speed to changes in the position of the speed control lever. Due to the fact that a regulation never can be done perfectly, the system tends to overreact to changes in the position of the speed control lever, something which is perceived as unpleasant by the operator. Another problem is that the fuel consumption of the truck runs the risk of becoming high, partly since the control unit is allowed to alternately increase the braking action and the engine speed at one and the same speed, bringing about that the engine is forced to work against the increasingly activated brake, and partly since the control unit tends to force the engine speed up to an unnecessarily high level. Yet another problem is that the operator cannot influence the characteristics of the braking action of the brake, since this is determined in the control system.

The object of the present invention is to achieve a truck reducing the above-mentioned problems. Said object is solved by the features of claim 1. In particular, the regulating range includes a first subrange, within which the control unit is arranged for bringing the brake to generate a braking torque by means of said brake regulating control signal, and a second subrange, within which the control unit is arranged for bringing the brake to be inactive by means of said brake regulating control signal.

In the following, the invention will be described in greater detail with reference to the following figures.

Figure 1 is a schematic illustration of a system for speed regulating a truck according to the invention.

Figure 2 shows a pedal-shaped speed control lever in three different positions.

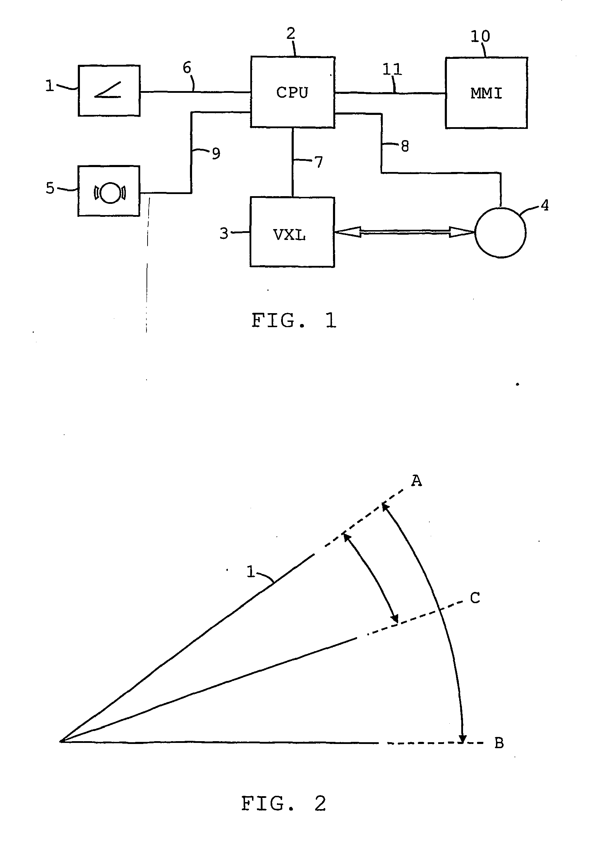

Figure 1 shows a system for regulating the speed of a truck. The system includes a speed control lever 1, which can be operated manually by the operator of the truck in order to regulate the truck speed. The speed control lever 1, preferably being in the form of a foot-operated pedal (see Figure 2), can be operated freely within a regulating range A-B between a first extreme position A and a second extreme position B. The first extreme position A corresponds to a speed of 0 km/h of the truck, and the second extreme position B corresponds to the maximum speed at which the truck can or may be operated. In other words, extreme position A corresponds to 0% and extreme position B corresponds to 100% of the maximum truck speed. Preferably, the system is arranged so that the speed increases substantially linearly with increased control lever deflection. Accordingly, by means of operating the speed control lever 1 between the extreme positions A and B, the operator can regulate the truck speed. The maximum truck speed can be for example 30 km/h.

According to the invention, the speed control lever 1 exhibits an intermediate control lever position C, dividing the regulating range A-B into a first subrange A-C and a second subrange C-B. The control lever position C corresponds to a predetermined desired speed value of the truck in the speed interval within which the truck can or may be operated. Accordingly, the predetermined desired speed value is within the interval 0-100% of the maximum speed. The predetermined desired speed value can be for example 50% of the maximum speed, in which case the control lever position C corresponds to a speed of 15 km/h if the maximum speed is 30 km/h.

Furthermore, the system includes a control unit 2, a gear box 3, an engine 4 and a brake 5. The control unit 2 is arranged for receiving information continuously about the position of the speed control lever 1 and for computing and transmitting gear ratio and speed regulating control signals, as a function of this position, to the gear box 3 and the engine 4, respectively, as well as brake regulating control signals to the brake 5. The speed control lever 1 is preferably electronic and connected to the control unit 2 via a first communication line 6, wherein said information has the form of a voltage signal within a predetermined voltage interval, said voltage signal being a function of the position of the speed control lever 1. Preferably, the speed control lever 1 is arranged so that the voltage signal varies linearly with the control lever deflection. For example, the voltage interval can be 0-5 volts, wherein 0 volt corresponds to extreme position A and 5 volts corresponds to extreme position B.

The control unit 2 preferably includes a computer unit, being arranged for processing the voltage signal and computing said control signals. For the distribution of the control signals, the control unit 2 is connected to the gear box 3 via a second communication line 7, to the engine 4 via a third communication line 8 and to the brake 5 via a fourth communication line 9. The gear box 3, the engine 4 and the brake 5 include devices for the physical regulation of the respective unit as a response to the respective control signal. Preferably, a proportional valve is used for the regulation of the gear box 3 and a servo-motor for the regulation of the engine 4. Preferably, a magnetic valve is used for the regulation of the brake 5.

The engine 4 is arranged for delivering a driving torque to the truck via the gear box 3, as a function of said gear ratio and speed regulating control signals, and the brake 5 is arranged for delivering a braking torque to the truck as a function of said brake regulating control signal. By means of the gear ratio and speed regulating control signals, the control unit 2 is arranged for bringing the gear box 3 and the engine 4 to generate a driving torque within the entire regulating range A-B. In other words, the system is arranged for generating a driving torque within the entire regulating range A-B. According to the invention, however, the system is arranged for activating the brake 5 only within the first subrange A-C, but not within the second subrange C-B. In other words, the control unit 2 is arranged for bringing the brake 5 to generate a braking torque within the first subrange A-C, but not within the second subrange C-B by means of the brake regulating control signal.

Accordingly, the first subrange A-C can be considered as a braked, and the second subrange C-B as an unbraked regulating range, and consequently, in principle, the speed control lever 1 functions as a combined throttle and brake control lever. Accordingly, within the first subrange A-C, the driving torque and the braking torque are interacting in order to give the truck the desired speed, i.e. the speed corresponding to the present control lever position. Within the second subrange C-B, the driving torque is acting alone in order to give the truck the speed corresponding to the present control lever position. It is true within both subranges A-C and C-B that the control unit 2 will regulate the speed of the engine 4 and/or the gear ratio of the gear box 3 when an the load on the truck is increased, for example in an upward slope, so that the speed corresponding to the present control lever position is maintained.

The braking torque is arranged in order to assume its maximum value in extreme position A in order to then decrease with increased control lever deflection and to assume its minimum value in extreme position C. For example, said maximum value is 100% of the available braking torque, i.e. the maximum braking torque which the brake 5 can deliver, and said minimum value is 0% of the available braking torque. Preferably, the reduction of the braking torque takes place substantially linearly with an increased control lever deflection from extreme position A to control lever position C. The driving torque is arranged to assume its minimum value in extreme position A where, in principle, it is zero, and its maximum value in extreme position B.

Since each position of the speed control lever 1 corresponds to a predetermined braking action, decreasing with the control lever deflection within subrange A-C and being zero within subrange C-B, a uniform regulation of the truck speed which is pleasant to the operator is obtained. Furthermore, the situation that the control unit 2 alternately increases the braking action and the engine speed is avoided. In that way, a low fuel consumption is obtained.

Preferably, the system includes a terminal 10, being connected to the computer unit of the control unit 2, by means of which the operator via a communication bus 11 can modify the way the control unit 2 computes said brake regulating control signal for the purpose of adapting the characteristics of the braking action to himself. Preferably, the operator is given a possibility to adjust the desired braking torque in extreme position A, said braking torque being for example 10-100% of the maximum braking action. Conveniently, this is done by means of allowing the operator to select a braking program amongst a predetermined number of braking programs, for example nine such programs, wherein braking program one implies that the braking torque in extreme position A is 10% of the maximum braking action and braking program nine implies that the braking torque in extreme position A is 100% of the maximum braking action. In the remaining braking programs two to eight, the braking torque is uniformly distributed between 0% and 100% of the maximum braking action. Preferably, the operator is also given a possibility to adjust the control lever position C, i.e. the extent of subrange A-C. For example, the operator could select control lever position C from a predetermined interval, for example 20-60% of the maximum speed at which the truck can or may be operated.

In the foregoing, the invention has been described starting from a specific embodiment. It will be appreciated, however, that variants and modifications are possible within the scope of the invention. For example, the system can include a separate foot-operated brake, by means of which the operator, in an emergency situation, can bypass the control unit 2 and operate the brake 5 directly.

In this patent application, truck relates to a counterweight truck (for example a fork truck), a side-stacking truck, a container truck or a similar vehicle for loading, unloading and handling goods in general.

## Claims

1. A truck, comprising an engine (4), a gear box (3), a brake (5) and a speed regulating system, said system including:
- a manual speed control lever (1), being controllable by the operator of the truck within a regulating range (A-B) having a first extreme position (A), corresponding to a speed of 0 km/h of the truck, and a second extreme position (B), corresponding to the maximum speed at which the truck can or may be operated,
- a control unit (2), being arranged for registering the position of the speed control lever (1) and for transmitting a gear ratio regulating control signal to the gear box (3), a speed regulating control signal to the engine (4), and a brake regulating control signal to the brake (5), as a function of said position,
wherein said control signals are arranged for controlling the speed of the engine (4), the gear ratio of the gear box (3) and the braking action of the brake (5), respectively, so that a truck speed corresponding to the position of the speed control lever (1) is obtained, **characterized in that** the control unit (2) is arranged for bringing the engine (4) to generate a driving torque within the entire regulating range (A-B) and **in that** the regulating range (A-B) includes a first subrange (A-C), within which the control unit (2) is arranged for bringing the brake (5) to generate a braking torque by means of said brake regulating control signal, as well as a second subrange (C-B), within which the control unit (2) is arranged for bringing the brake (5) to be inactive by means of said brake regulating control signal.

2. A truck according to claim 1, **characterized in that** an intermediate control lever position (C) of the speed control lever (1), said control lever position (C) corresponding to a predetermined truck speed, divides said regulating range (A-B) into said first subrange (A-C) and said second subrange (C-B).

3. A truck according to claim 2, **characterized in that** the braking torque is arranged in order to assume its maximum value in the first extreme position (A) and to then decrease with an increased control lever deflection and to assume its minimum value in the intermediate control lever position (C).

4. A truck according to claim 3, **characterized in that** the braking torque is between 10% and 100% of the maximum braking torque which the brake (5) can deliver in the first extreme position (A) and 0% of the maximum braking torque which the brake (5) can deliver in the intermediate control lever position (C).

5. A truck according to any one of claims 3 and 4, **characterized in that** the braking torque is arranged for decreasing substantially linearly from the first extreme position (A) to the intermediate control lever position (C).

6. A truck according to any one of claims 1-5, **characterized in that** the speed regulating system also includes a terminal (10), being connected to the control unit (2), by means of which the operator can modify the characteristics of the braking action of the brake (5).

7. A truck according to claim 6, **characterized in that** the braking torque in the first extreme position (A) is selectable by the operator.

## Patentansprüche

1. Lastkraftfahrzeug mit einem Antrieb (4), einem Getriebe (3), einer Bremse (5) und einem Geschwindigkeitsregelsystem, wobei das Geschwindigkeitsregelsystem
- einen manuellen Geschwindigkeitswählhebel (1), der vom Fahrer des Lastkraftfahrzeugs innerhalb eines Einstellbereichs (A-B) mit einer ersten Extremposition (A), die einer Geschwindigkeit des Lastkraftfahrzeugs von 0 km/h entspricht, und einer zweiten Extremposition (B), die der maximal möglichen oder gewünschten Geschwindigkeit des Lastkraftfahrzeugs entspricht, einstellbar ist, und
- eine Steuereinrichtung (2), die derart angepasst ist, dass die Position des Geschwindigkeitswählhebels (1) erfassbar und, als Funktion der Position, ein Steuersignal zum Steuern der Getriebeübersetzung an das Getriebe (3), ein Steuersignal zum Steuern der Drehzahl an den Antrieb (4) und ein Steuersignal zum Steuern der Bremse an die Bremse (5) übertragbar ist,
umfasst, wobei die Steuersignale angepasst sind derart, dass die Drehzahl des Antriebs (4), die Getriebeübersetzung des Getriebes (3) und die Bremswirkung der Bremse (5) steuerbar sind, so dass eine Geschwindigkeit des Lastkraftfahrzeugs erreichbar ist, die der Position des Geschwindigkeitswählhebels (1) entspricht,
**dadurch gekennzeichnet, dass**
die Steuereinrichtung (2) angepasst ist derart, dass der Antrieb (4) zur Erzeugung eines Antriebsmoments innerhalb des gesamten Steuerbereichs (A-B) angesteuert wird, wobei der Steuerbereich (A-B) einen ersten Unterbereich (A-C) umfasst, innerhalb dessen die Steuereinrichtung (2) angepasst ist derart, dass die Bremse (5) mittels des Steuersignals zum Steuern der Bremse (5) zur Erzeugung eines Bremsmoments angesteuert wird, und wobei der Steuerbereich (A-B) einen zweiten Unterbereich (C-B) umfasst, innerhalb dessen die Steuereinrichtung angepasst ist derart, dass die Bremse (5) mittels des Steuersignals zum Steuern der Bremse (5) in einen inaktiven Zustand überführbar ist.

2. Lastkraftfahrzeug nach Anspruch 1,
**dadurch gekennzeichnet, dass**
eine mittlere Wählhebelposition (C) des Geschwindigkeitswählhebels (1) den Einstellbereich (A-B) in den ersten Unterbereich (A-C) und in den zweiten Unterbereich (C-B) aufteilt, wobei die mittlere Wählhebelposition (C) einer zuvor festgelegten Geschwindigkeit des Lastkraftfahrzeugs entspricht.

3. Lastkraftfahrzeug nach Anspruch 2,
**dadurch gekennzeichnet, dass**
das Bremsmoment angepasst ist derart, dass der Maximalwert des Bremsmoments bei der ersten Extremposition (A) erreicht ist, der Wert mit ansteigender Auslenkung des Geschwindigkeitwählhebels (1) abnimmt und der Minimalwert des Bremsmoments bei der mittleren Wählhebelposition (C) erreicht ist. -

4. Lastkraftfahrzeug nach Anspruch 3,
**dadurch gekennzeichnet, dass**
das Bremsmoment zwischen 10% und 100% des maximalen Bremsmoments, das die Bremse (5) bei der ersten Extremposition (A) aufbringen kann, und bei 0% des maximalen Bremsmoments, das die Bremse (5) bei der mittleren Wählhebelposition (C) aufbringen kann, liegt.

5. Lastkraftfahrzeug nach den Ansprüchen 3 oder 4,
**dadurch gekennzeichnet, dass**
das Bremsmoment angepasst ist derart, dass die Abnahme des Bremsmoments im Wesentlichen linear von der ersten Extremposition (A) zur mittleren Wählhebelposition (C) erfolgt.

6. Lastkraftfahrzeug nach wenigstens einem der Ansprüche 1 bis 5,
**dadurch gekennzeichnet, dass**
das Geschwindigkeitsregelsystem eine Bedieneinrichtung (10) umfasst, die mit der Steuereinrichtung (2) verbunden ist, mit der der Fahrer die Eigenschaften der Bremswirkung der Bremse (5) verändern kann.

7. Lastkraftfahrzeug nach Anspruch 6,
**dadurch gekennzeichnet, dass**
das Bremsmoment in der ersten Extremposition (A) vom Fahrer wählbar ist.

## Revendications

1. Camion, comprenant un moteur (4), une boîte de vitesses (3), un frein (5) et un système de régulation de vitesse, ledit système comprenant :
- un levier de contrôle de vitesse manuel (1), qui peut être contrôlé par le conducteur du camion dans une plage de régulation (A-B) ayant une première position extrême (A), correspondant à une vitesse de 0 km/h du camion, et une seconde position extrême (B), correspondant à la vitesse maximale à laquelle le camion peut ou a la possibilité d'être conduit,
- une unité de contrôle (2), qui est agencée pour enregistrer la position du levier de contrôle de vitesse (1) et pour transmettre un signal de contrôle de régulation de rapport de vitesse à la boîte de vitesses (3), un signal de contrôle de régulation de vitesse au moteur (4) et un signal de contrôle de régulation de frein au frein (5), en fonction de ladite position,
dans lequel lesdits signaux de contrôle sont agencés pour contrôler la vitesse du moteur (4), le rapport de vitesse de la boîte de vitesses (3) et l'action de freinage du frein (5), respectivement, de sorte qu'une vitesse de camion correspondant à la position du levier de contrôle de vitesse (1) soit obtenue,
**caractérisé en ce que** l'unité de contrôle (2) est agencée pour amener le moteur (4) à générer un couple d'entraînement dans la plage de régulation (A-B) tout entière et **en ce que** la plage de régulation (A-B) comprend une première plage secondaire (A-C) dans laquelle l'unité de contrôle (2) est agencée pour amener le frein (5) à générer un couple de freinage au moyen dudit signal de contrôle de régulation de frein, ainsi qu'une seconde plage secondaire (C-B), dans laquelle l'unité de contrôle (2) est agencée pour amener le frein (5) à être inactif au moyen dudit signal de contrôle de régulation de frein.

2. Camion selon la revendication 1, **caractérisé en ce qu'**une position de levier de contrôle intermédiaire (C) du levier de contrôle de vitesse (1), ladite position de levier de contrôle (C) correspondant à une vitesse de camion prédéterminée, divise ladite plage de régulation (A-B) en ladite première plage secondaire (A-C) et ladite seconde plage secondaire (C-B).

3. Camion selon la revendication 2, **caractérisé en ce que** le couple de freinage est agencé afin de prendre sa valeur maximale dans la première position extrême (A) puis pour diminuer avec une déviation de levier de contrôle accrue et pour prendre sa valeur minimale dans la position de levier de contrôle intermédiaire (C).

4. Camion selon la revendication 3, **caractérisé en ce que** le couple de freinage est entre 10 % et 100 % du couple de freinage maximal que le frein (5) peut transmettre dans la première position extrême (A) et de 0 % du couple de freinage maximal que le frein (5) peut transmettre dans la position de levier de contrôle intermédiaire (C).

5. Camion selon l'une quelconque des revendications 3 et 4, **caractérisé en ce que** le couple de freinage est agencé pour diminuer de manière sensiblement linéaire à partir de la première position extrême (A) jusqu'à la position de levier de contrôle intermédiaire (C).

6. Camion selon l'une quelconque des revendications 1 à 5, **caractérisé en ce que** le système de régulation de vitesse comprend également un terminal (10), qui est relié à l'unité de contrôle (2), au moyen duquel le conducteur peut modifier les caractéristiques de l'action de freinage du frein (5).

7. Camion selon la revendication 6, **caractérisé en ce que** le couple de freinage dans la première position extrême (A) peut être choisi par le conducteur.
